# EUROPÄISCHE PATENTSCHRIFT

(11) **EP 1 128 988 B1**
(45) Veröffentlichungstag und Bekanntmachung des Hinweises auf die Patenterteilung: **02.10.2002**
(21) Anmeldenummer: 99952205.5
(22) Anmeldetag: 05.11.1999
(51) Int. Cl.: B60R 13/02, B32B 5/18

(54) **FAHRZEUGDACH-AUSKLEIDUNG UND VERFAHREN ZUR HERSTELLUNG DERSELBEN**
VEHICLE ROOFLINING AND METHOD FOR PRODUCING THE SAME
REVETEMENT DE TOIT DE VEHICULE ET SON PROCEDE DE PRODUCTION

(30) Priorität: 11.11.1998 CH 226698
(43) Veröffentlichungstag der Anmeldung: 05.09.2001
(73) Patentinhaber: RIETER AUTOMOTIVE (INTERNATIONAL) AG, 8702 Zollikon (CH)
(72) Erfinder: Aggarwal, Anuj, Crown Point, IN 46307 (US); Khan, Hameed, Crown Point, IN 46307 (US); Crepeau, Howard, Lowell, IN 46356 (US); Alts, Thorsten, 64401 Gross-Bieberau (DE); Chawla, Paul, 10098 Torino (IT)
(74) Vertreter: Graf, Seifert & Partner
(86) Internationale Anmeldenummer: CH9900521
(87) Internationale Veröffentlichungsnummer: WO00027671

(56) Entgegenhaltungen:
- EP-A- 0 637 820
- EP-A- 0 832 787
- EP-A- 0 949 066
- WO-A-92/01587
- WO-A-98/18656
- WO-A-98/18657
- FR-A- 2 503 721
- US-A- 5 536 556
- US-A- 5 582 906

## Beschreibung

Die vorliegende Erfindung betrifft eine Fahrzeugdach-Auskleidung gemäss Oberbegriff des Anspruchs 1 und ein Verfahren zur Herstellung derselben.

Diese Fahrzeugdach-Auskleidung zeichnet sich durch ein besonders gutes akustisches Verhalten aus und eignet sich für eine ultraleichte Bauweise.

Grossflächige Fahrzeugteile, insbesondere Fahrzeugdächer, neigen aufgrund ihrer geringen Eigenstabilität dazu, sich beim Fahren zu deformieren, zu vibrieren und zu schwingen. Diesem Verhalten wird konventionellerweise durch das Anbringen von Dämpfungsmaterial, insbesondere von Schwerschichten aus Bitumen, entgegengewirkt. Um die Übertragung von Fahrgeräuschen ins Wageninnere zu reduzieren, werden in der Automobilindustrie seit längerem mehrschichtige Schallisolationspakete eingesetzt. Diese Schallisolationspakete sind in der Regel als Feder-Masse-Systeme konzipiert und weisen eine mit einer elastischen Federschicht gekoppelte luftdichte Schwerschicht auf, um die Vibrationen der grossflächigen Karosserieteile zu dänpfen und die Schalltransmission zu dämmen.

Ein solches Schallisolationspaket ist bspw. in der EP-0'255'332 beschrieben und umfasst eine halbflexible Trägerschicht, mit welcher die Dachauskleidung in Art eines Schnappverschlusses gegen das Fahrzeugdach gespannt werden kann. Mit dieser Trägerschicht wird ein klassisches Feder-Masse-System mit einer federnden, schallabsorbierenden Schaumschicht und einer viskoelastischen, geschlossenporigen Schwerschicht (Bitumen-gefüllt) gegen das Fahrzeugdach angepresst.

Aus der gattungsgemässen EP-0'637'820 ist bspw. eine schallabsorbierende Dachauskleidung bekannt, welche im wesentlichen eine ca. 5-15 mm dicke, halbsteife PU-Schaumschicht und eine 4-10 mm dicke, federelastische Verbundfaserschicht aufweist, wobei beide Schichten luftdurchlässig sind. Die Schaumschicht ist bei dieser Ausführungsform beidseitig mit Glasfasern verstärkt und weist fahrgastraumseitig eine luftdurchlässige Dekorschicht auf. Die einzelnen Schichten sind wiederum mit einem luftdurchlässigen Kleber, insbesondere einem PU-Kleber, miteinander verbunden. Auch bei dieser schallabsorbierenden Dachauskleidung handelt es sich um ein klassisches Feder-Masse-System.

Bei derartigen Dachauskleidungen zeigt es sich jedoch, dass wegen des offenporigen Aufbaus dieser Schallabsorber, deren Kleberkomponenten bereits bei der Fertigung dieser Dachauskleidungen relativ rasch in die Dekorschicht dringen und zu visuell wahrnehmbaren Flecken und damit zu einer relativ hohen Ausschussproduktion führen. Die Verwendung durchlässiger Schichten führt also unmittelbar zu unerwünschten Beeinträchtigungen des Erscheinungsbildes der Dachauskleidungen.

Darüberhinaus führen Feder-Masse-Anordnungen immer zu Resonanzeinbrüchen in der Schallisolation, die üblicherweise im Frequenzbereich der niederen Motorordnungen liegen und dort besonders unerwünscht sind.

Es ist jedoch das generelle Bestreben der Automobilindustrie, das Gewicht der Fahrzeuge zu reduzieren. Dies hat zur Folge, dass vermehrt auch dünnere und leichtere Karosserie- und Auskleidungsteile eingesetzt werden, die zu wesentlichen akustischen Problemen führen.

Es ist deshalb auch schon vorgeschlagen worden, bspw. in der FR 2 503 721, eine leichte Dachauskleidung zu schaffen, welche im wesentlichen aus einer porösen und glasfaserverstärkten Schaumschicht besteht, welche mit einer Dekorschicht überzogen ist und zwischen dieser Dekorschicht und der glasfaserverstärkten Schaumschicht eine luftundurchlässige Polyethylen-Folie aufweist, um das Permeieren von Klebstoffkomponenten in die Dekorschicht zu verhindern. Wegen dieser Folie weist diese vorgeschlagene Dachauskleidung eine schlechte akustische Absorption auf, die allenfalls durch eine Perforation verbessert werden könnte. Eine solche Perforation der PE-Folie kann jedoch wieder zu visuell wahrnehmbaren Veränderungen der Dekorschicht führen. Bei der in dieser Schrift dargestellten Herstellungsweise ist die dachseitige Rückenschicht perforiert, d.h. luftdurchlässig, und steht somit im Widerspruch zu modernen gesetzlichen Vorschriften zur Konstruktion von Fahrzeugdach-Auskleidungen. Diese Vorschriften verbieten einen direkten Luftdurchfluss zwischen Fahrzeugdach und Fahrgastraum.

Der Erfindung liegt daher die Aufgabe zugrunde, eine Dachauskleidung zu schaffen, welche abhängig von deren spezifischen Einsatz eine optimale Schallabsorption aufweist und gleichzeitig ein ästhetisch beständiges Erscheinungsbild behält.

Diese Aufgabe wird erfindungsgemäss durch eine Auskleidung mit den Merkmalen des Anspruchs 1 gelöst, und insbesondere dadurch, dass zwischen einer luftdurchlässigen Dekorschicht und einem mehrschichtigen Strukturelement eine semipermeable und migrationsresistente Sperrschicht vorgesehen ist. Das mehrschichtige Strukturelement ist ebenfalls luftdurchlässig und umfasst eine Trägerschicht, insbesondere eine PU-Schaumschicht, welche beidseitig mit einer luftdurchlässigen Verstärkungsschicht, insbesondere aus Glasfasern, versehen ist. Diese Schichten sind in bekannter Weise miteinander verklebt. Die Dekorschicht kann aus einem Faservlies oder einem anderen luftdurchlässigen Material, z.B. einem Textilgewirk, bestehen. Die erfindungsgemäss verwendete semipermeable und migrationsresistente Sperrschicht ist einerseits undurchlässig für und migrationsresistent gegen die verwendeten Kleber respektive deren Komponenten respektive Zusätzen und ist andererseits mikroporös, d.h. luftdurchlässig und weist eine Dicke von 0.1 < d < 1.0 mm auf und ist derart ausgelegt, dass damit ein Luftströmungswiderstand von 500Nsm⁻³ < R₁ < 2500Nsm⁻³, insbesondere von 900Nms⁻³ < R₁ < 1900Nsm⁻³ erzeugt wird. Es ist für die Optimierung der akustischen Wirksamkeit der Fahrzeugdachauskleidung wesentlich, dass der Luftströmungswiderstand fahrgastraumseitig im angestrebten Bereich liegt. Darüberhinaus wird die luftdurchlässige, d.h. offenporige Sperrschicht aus einem Material gefertigt, welches semipermeabel und migrationsresistent ist und insbesondere die Durchdringung, respektive Permeation und/oder Migration des verwendeten Klebers, respektive dessen Komponenten, und/oder der verwendeten Weichmacher, der altersbedingten Zersetzungsprodukte und/oder der Zusätze aus der PU-Schaumschicht oder der Klebschichten verhindert. Derartige Sperrschichten sind auf dem Markt erhältlich und sind bspw. aus chemisch miteinander gebundenen Zellulose- und Polyesterfasern gefertigt.

Ein bevorzugtes Verfahren zur Herstellung einer erfindungsgemässen Auskleidung sieht vor, auf eine kontinuierlich abgerollte Unterschicht, resp. Rückenschicht, insbesondere aus Polyethylen, Verstärkungsfasern, bspw. Glasfasern oder Polyesterfasern, abzulegen und darauf eine kontinuierlich abgerollte Trägerschicht, insbesondere eine PU-Schaumschicht aufzubringen. Diese bahnförmige Schichtenfolge wird mit einer ersten Komponente eines Klebers, insbesondere eines PU-Klebers, imprägniert. In einer bevorzugten Ausführungsform wird diese Schichtenfolge als Bahn durch ein entsprechend gefülltes Bad geführt. Um die Menge der applizierten ersten Kleberkomponente kontrollieren zu können, wird diese imprägnierte Schichtenbahn durch ein Quetschrollenpaar geführt. Auf die derart bearbeitete Schichtenbahn werden wiederum Verstärkungsfasern aufgebracht und wird eine zweite Kleberkomponente aufgesprüht, bevor eine semipermeable und migrationsresistente Sperrschicht aufgebracht und an die anderen Schichten angepresst wird. In einem nächsten Verfahrensschritt wird eine Dekorschicht, z.B. ein 100 g/m² schweres PE-Faservlies auf diese Sperrschicht aufgebracht.

Die derart hergestellte Bahn wird anschliessend in geeignete Stücke geschnitten und in bekannter Weise, d.h. mit geheizten Formpresswerkzeugen geformt, um die gewünschten Fahrzeugdachauskleidungen zu erhalten.

Es versteht sich, dass die Materialien für diese Auskleidung und die zur Herstellung dieser Auskleidung benötigten Chemikalien nicht auf die hier beispielhaft aufgezeigte Auswahl beschränkt sind. Der Fachmann wird, je nach Anwendungsbereich des erfindungsgemässen Produktes geeignete Materialien und Chemikalien wählen. Das oben beschriebene, kontinuierliche Herstellungsverfahren kann selbstverständlich auch platten- respektive schrittweise vorgenommen werden.

Im folgenden soll die Erfindung anhand der Figuren und eines Ausführungsbeispiels näher erläutert werden. Es zeigen:
- Fig. 1: eine schematische Darstellung des Aufbaus eines erfindungsgemässen Auskleidungsteils;
- Fig. 2: eine schematische Darstellung des Verfahrens zur Herstellung einer erfindungsgemässen Auskleidung.
- Fig. 3: eine vergleichende graphische Darstellung der frequenzabhängigen Schallabsorption einer erfindungsgemässen Auskleidung.

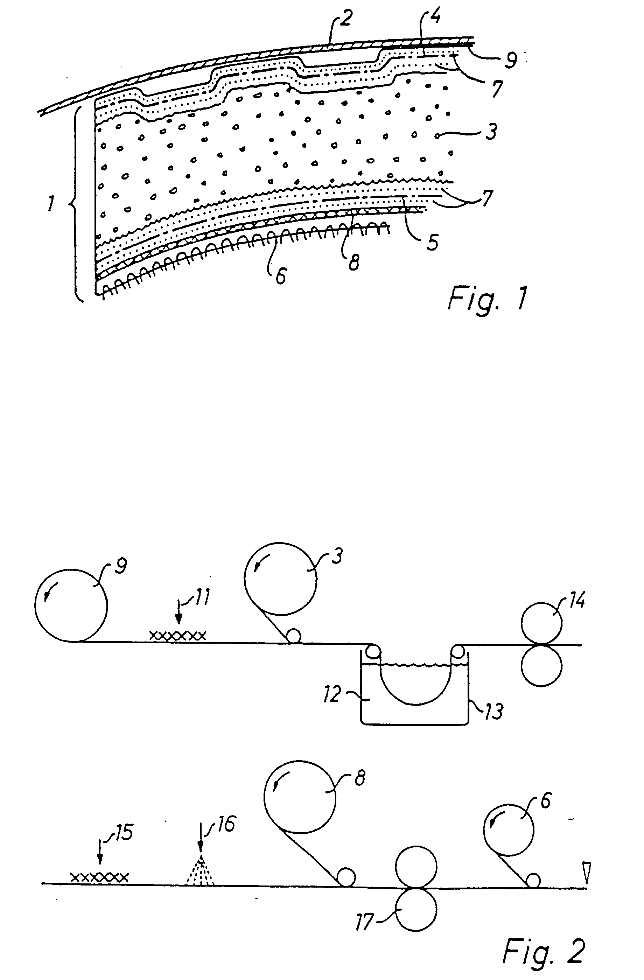

Figur 1 zeigt den Aufbau einer erfindungsgemässen Auskleidung in schematischer Weise. Diese Auskleidung weist eine zentrale Trägerschicht 3 auf, die aus einem luftdurchlässigen Material, vorzugsweise aus einem offenporigen PU-Schaum besteht. Diese Schaumschicht 3 weist in einer bevorzugten Ausführungsform eine Dicke von ca. 5 bis 30 mm, insbesondere 20 mm, auf und hat ein Raumgewicht von 20 bis 60 kg/m³. Beidseitig dieser Trägerschicht 3 ist jeweils eine Verstärkungsschicht 4 resp. 5 angeordnet. Diese Verstärkungsschichten werden vorzugsweise aus Glasfasern gebildet und sind mit einem Kleber 7 an der Trägerschicht 3 befestigt. In einer bevorzugten Ausführungsform wird beidseitig eine Glasfaserschicht mit einem Flächengewicht von ca. 50 g/m² verwendet, deren Dicke etwa dem 1- bis 3-fachen Durchmesser der Fasern entspricht. Es versteht sich, dass für die Verstärkungsschichten auch andere geeignete, d.h. steife Materialien verwendet werden können. Wesentlich für die vorliegende Erfindung ist es, dass die einzelnen oben genannten Schichten luftdurchlässig sind und auch der Kleber 7 eine Luftdurchströmung dieser Schichten zulässt. Fahrzeugdachseitig ist eine luftundurchlässige Rückenschicht 9, vorzugsweise aus Polyethylen, vorgesehen. Mit dieser Rückenschicht 9 wird verhindert, dass Luft aus dem Fahrgastraum durch die luftdurchlässige Auskleidung 1 in den Raum zwischen dem Fahrzeugdach 2 und der Auskleidung 1 strömen kann. Fahrgastraumseitig ist eine luftdurchlässige Dekorschicht 6, bspw. ein 100 g/m² schweres PE-Faservlies, angebracht. Erfindungsgemäss liegt zwischen der Dekorschicht 6 und der Trägerschicht 3 eine mikroporöse, semi-permeable und migrationsresistente Sperrschicht 8. Diese Sperrschicht 8 ist in einer bevorzugten Ausführungsform aus miteinander verbundenen Zellulose- und Polyesterfasern gefertigt und ist einerseits gasdurchlässig, insbesondere permeabel für Luft, andererseits jedoch undurchlässig, d.h. impermeabel für mindestens die bei der Fertigung der Auskleidung verwendeten flüssigen oder zähflüssigen Stoffe, insbesondere Kleberkomponenten und wirkt deshalb als Sperrschicht für den verwendeten Kleber 7. Darüberhinaus ist diese Sperrschicht 8 aus einem Material gefertigt, welches die Migration von Kleberkomponenten, allfälligen Weichmachern, altersbedingten Zersetzungsprodukten und/oder chemischen Zusätzen verhindert. Die Permeabilität für Luft wird durch die mikroporöse und luftdurchlässige Struktur dieser Sperrschicht 8 erreicht. Insbesondere lässt sich durch die Wahl des Faserdurchmessers, der Sperrschichtdichte und deren Dicke der Luftströmungswiderstand durch diese Schicht 8 vorbestimmen. In einer bevorzugten Ausführungsform weist diese Sperrschicht 8 eine Dicke von 0.1 < d < 1.0 mm auf und ist derart ausgelegt, dass damit in den fahrgastraumseitigen Schichten der Auskleidung ein Luftströmungswiderstand von 500Nsm⁻³ < R₁ < 2500Nsm⁻³, insbesondere von 900Nms⁻³ < R₁ < 1900Nsm⁻³ erzeugt wird. Die Oberflächen dieser Sperrschicht 8 können behandelt sein, d.h. für die mit diesen Oberflächen wechselwirkenden Kleber benetzend sein, während der Kernbereich dieser Sperrschicht 8 für diese Kleber stark abstossend wirken kann. Geeignete Oberflächenbehandlungen, bspw. durch Abflämmen, mit chemischem Primer oder durch Korona-Behandlung, sind dem Fachmann bekannt. Die Benetzungsfähigkeit dieser Sperrschichtoberflächen ist derart gewählt, dass diese Oberflächen mit den verwendeten Klebern wohl eine Haftung eingehen, aber diese Kleber keinen geschlossenen, luftundurchlässigen Film bilden können. In dieser bevorzugten Ausführungsform wird eine Sperrschicht aus Polyester- und Zellulosefasern mit einem Flächengewicht von 20 bis 60 g/m², insbesondere 40 g/m² verwendet. Das Gewicht der notwendigen Kleber beträgt ca. 60 g/m². Damit kann eine Auskleidung mit einem Gesamtgewicht von ca. 800 g/m² und einer Dicke von ca. 22 mm geschaffen werden.

Das in Figur 2 dargestellte Verfahren zur Herstellung einer erfindungsgemässen Auskleidung verwendet eine dünne Rückenschicht 9, die kontinuierlich von einer Rolle abgezogen wird. Diese Rückenschicht besteht vorzugsweise aus Polyethylen und dient als undurchlässige Unterschicht, auf welche die übrigen Materialen aufgelegt werden. In einem ersten Verfahrensschritt werden Verstärkungsfasern 11, insbesondere Glasfasern auf diese Rückenschicht 9 locker aufgestreut. Auf diese Glasfasern 11 wird anschliessend eine Trägerschicht 3, insbesondere eine PU-Schaumschicht aufgelegt. Auch diese Trägerschicht 3 kann von einer Rolle abgezogen werden. In einem weiteren Verfahrensschritt werden diese drei Schichten 9, 11, 3, durch ein Bad 13 geführt, in welchem eine erste Kleberkomponente aufbewahrt wird. Um die Menge dieser applizierten Kleberkomponente regulieren zu können wird diese durchtränkte Schichtenfolge zwischen zwei ersten Quetschrollen 14 hindurchgeführt. Nach dieser Quetschung werden wiederum Verstärkungsfasern 15, insbesondere Glasfasern, aufgestreut und nachfolgend mit einer zweiten Kleberkomponente 16 besprüht. Auf das derart behandelte Materialband wird die mikroporöse, semipermeable und migrationsresistente Sperrschicht 8 aufgebracht und mit Hilfe eines zweiten Quetschrollenpaars 17 angepresst. Mit einem nächsten Verfahrensschritt wird eine Dekorschicht 6 aufgebracht. Anschliessend wird dieses Material zugeschnitten und in einem beheizten Presswerkzeug in die gewünscht Form gebracht.
Es versteht sich, dass dieses hier beispielhaft beschriebene kontinuierliche Herstellungsverfahren vom Fachmann in einfacher Weise in ein diskontinuierliches, d.h. schrittweises Herstellungsverfahren modifiziert werden kann.

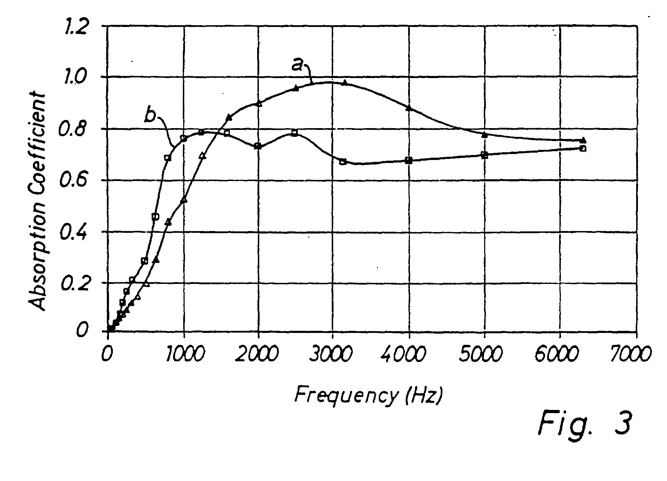

Die in Figur 3 gezeigten Kurven zeigen die akustische Wirksamkeit der erfindungsgemässen Auskleidung. Dabei stellt Kurve (a) das Schallabsorptionsverhalten einer Fahrzeugdachauskleidung ohne erfindungsgemässe Sperrschicht 8 dar. Aus dieser Kurve wird deutlich, dass durch die Offenporigkeit der fahrgastraumseitigen Schichten eine Absorption von über 0.8 erzielt werden kann. Derartig hohe Absorptionskoeffizienten sind jedoch im Bereich der Fahrzeugakustik unerwünscht, da damit die Sprachverständlichkeit im Fahrgastraum stark beeinträchtigt wird. Der Verlauf dieser Kurve (a) zeigt darüberhinaus eine ungenügende Absorption der Fahrzeugdachauskleidung im Bereich unterhalb 1500 Hz. Demgegenüber lässt die das Absorptionsverhalten einer erfindungsgemässen Auskleidung mit mikroporöser Sperrschicht charakterisierende Kurve (b) erkennen, dass diese Dachauskleidung bereits bei Frequenzen von 800 Hz eine befriedigende Absorption aufweist und der Absorptionskoeffizient für höhere Frequenzen im Bereich zwischen 0.7 bis 0.8 schwankt. Dieser Vergleich macht die gewonnenen Vorteile der erfindungsgemässen Fahrzeugdachauskleidung offensichtlich.

Es versteht sich, dass Weiterbildungen dieser Fahrzeugdachauskleidung im Bereich des normalen technischen Handels des Fachmanns liegen. Insbesondere wird der Fachmann mit seinen Kenntnissen geeignete Materialien und Kleber für den Aufbau einer erfindungsgemässen Fahrzeugdachauskleidung auswählen. Ebenso gehört die besondere Gestaltung resp. Formgebung der Dachauskleidung in das normale technische Handeln des Fachmanns.

## Patentansprüche

1. Auskleidung für ein Fahrzeugdach (2) mit einer luftdurchlässigen Trägerschicht (3), welche Trägerschicht (3) fahrzeugdachseitig eine erste luftdurchlässige Verstärkungsschicht (4) und fahrgastraumseitig eine zweite luftdurchlässige Verstärkungsschicht (5) aufweist, wobei die erste Verstärkungsschicht fahrzeugdachseitig eine luftundurchlässige Rückenschicht (9) aufweist, die zweite Verstärkungsschicht (5) fahrgastraumseitig mit einer luftdurchlässigen Dekorschicht (6) versehen ist und die einzelnen Schichten mit einem luftdurchlässigen Kleber (7) miteinander verbunden sind,
**dadurch gekennzeichnet, dass** zur Erzeugung einer akustisch optimierbaren und ästhetisch beständigen Fahrzeugdach-Auskleidung, zwischen der zweiten Verstärkungsschicht (5) und der Dekorschicht (6) eine semipermeable und migrationsresistente Sperrschicht (8) vorgesehen ist.

2. Auskleidung nach Anspruch 1, **dadurch gekennzeichnet, dass** die fahrgastraumseitigen Schichten einen Luftströmungswiderstand von 500Nsm⁻³ < R₁ < 2500Nsm⁻³, insbesondere von 900Nms⁻³ < R₁ < 1900Nsm⁻³ aufweisen.

3. Auskleidung nach einem der Ansprüche 1 oder 2, **dadurch gekennzeichnet, dass** die luftdurchlässige Trägerschicht (3) aus einem PU-Schaum gefertigt ist.

4. Auskleidung nach einem der Ansprüche 1 bis 3, **dadurch gekennzeichnet, dass** die Verstärkungsschicht (4) eine Glasfaserschicht umfasst.

5. Auskleidung nach einem der Ansprüche 1 bis 4, **dadurch gekennzeichnet, dass** die Sperrschicht (8) aus einem ca. 20 bis 60 g/m² schweren Mischfaservlies, und insbesondere aus einem ca. 45g/m2 schweren Mischfaservlies besteht.

6. Auskleidung nach Anspruch 5, **dadurch gekennzeichnet, dass** die Sperrschicht (8) chemisch miteinander verbundene Zellulose- und Polyesterfasern enthält.

7. Auskleidung nach Anspruch 6, **dadurch gekennzeichnet, dass**, zur Erlangung der gewünschten Benetzungseigenschaften, die Oberfläche der Sperrschicht entsprechend behandelt ist.

8. Auskleidung nach einem der Ansprüche 1 bis 7, **dadurch gekennzeichnet, dass** die Sperrschicht (8) migrationsresistent gegen Weichmacher, altersbedingte Zersetzungsprodukte und/oder Zusätze aus der PU-Schaumschicht oder den Klebschichten ist.

9. Auskleidung nach einem der Ansprüche 1 bis 8, **dadurch gekennzeichnet, dass** die Sperrschicht (8) eine Dicke von 0.2 bis 1.0 mm, insbesondere von 0.285 mm, aufweist.

10. Auskleidung nach einem der Ansprüche 1 bis 9, **dadurch gekennzeichnet, dass** der Kleber (7) ein konventioneller Zweikomponenten-PU-Kleber ist.

11. Auskleidung nach einem der Ansprüche 1 bis 10, **dadurch gekennzeichnet, dass** die Dekorschicht (6) eine luftdurchlässige PE-Vliesschicht ist.

12. Verfahren zur Herstellung einer Fahrzeugdach-Auskleidung gemäss Anspruch 1, **dadurch gekennzeichnet, dass**
a) eine luftundurchlässige Rückenschicht (9) mit ersten Verstärkungsfasern (11), insbesondere Glasfasern, belegt wird und auf die Verstärkungsfasern (11) eine Trägerschicht (3), insbesondere eine PU-Schaumschicht, aufgebracht wird,
b) die Rückenschicht (9), Verstärkungsfasern (11) und Trägerschicht (3) gemeinsam mit einer vorgegebenen Menge einer ersten Komponente (12) eines Klebers (7) imprägniert werden und dazu bspw. gemeinsam durch ein mit dieser ersten Komponente (12) gefülltes Bad (13) und nachfolgend angeordnete erste Quetschrollen (14) geführt werden,
c) die derart imprägnierte Trägerschicht (3) mit zweiten Verstärkungsfasern (15), insbesondere Glasfasern, belegt wird und anschliessend mit einer zweiten Komponente (16) des Klebers (7) benetzt, insbesondere besprüht, wird,
d) auf die zweiten Verstärkungsfasern (15) eine semipermeable und migrationsresistente Sperrschicht (8) aufgebracht wird, die anschliessend mit den anderen Schichten (9, 11, 3, 15) bspw. mit Hilfe von zweiten Quetschrollen (17), angepresst wird, um die beiden Kleberkomponenten (12, 16) miteinander reagieren zu lassen, bevor auf diese Sperrschicht (8) eine selbstklebende Dekorschicht (6) aufgebracht wird,
e) die derart aufeinander gebrachten Schichten in gewünschter Weise zugeschnitten und heiss geformt werden.

## Claims

1. Lining for a vehicle roof (2) with an air-permeable support layer (3), which support layer (3) has a first air-permeable reinforcement layer (4) on the vehicle side and a second air-permeable reinforcement layer (5) on the passenger compartment side, the first reinforcement layer on the vehicle roof side having an air-impermeable back layer (9), the second reinforcement layer (5) being provided with an air-permeable decorative layer (6) on the passenger compartment side and the individual layers being bonded to each other with an air-permeable adhesive (7), **characterised in that** to make an acoustically optimisable and aesthetically-resistant vehicle rooflining, a semi-permeable and migration-resistant barrier layer (8) is provided between the second reinforcement layer (5) and the decorative layer (6).

2. Lining according to claim 1, **characterised in that** the layers on the passenger compartment side have an air flow resistance of 500Nsm-³ < R1 < 2500 Nsm-³, especially 900 Nms-³ < R1 < 1900Nsm-³.

3. Lining according to one of claims 1 or 2, **characterised in that** the air-permeable support layer (3) is made from a PU foam.

4. Lining according to one of claims 1 to 3, **characterised in that** the reinforcement layer (4) comprises a glass fibre layer.

5. Lining according to one of claims 1 to 4, **characterised in that** the barrier layer (8) consists of a mixed fibre fabric, weighing approximately 20 g/m² to 60 g/m² and especially a mixed fibre fabric weighing approximately 45 g/m2.

6. Lining according to Claim 5, **characterised in that** the barrier layer (8) contains chemically-bonded cellulose and polyester fibres.

7. Lining according to Claim 6, **characterised in that** the surface of the barrier layer is treated accordingly to achieve the required wetting properties.

8. Lining according to Claims 1 to 7, **characterised in that** the barrier layer (8) is migration-resistant to softeners, decomposition products used by ageing and / or additives from the PU foam layer or the adhesive films.

9. Lining according to Claims 1 to 8, **characterised in that** the barrier layer (8) has a thickness of 0.2 mm to 1.0 mm, especially 0.285 mm.

10. Lining according to Claims 1 to 9, **characterised in that** adhesive (7) is a conventional two-pack PU adhesive.

11. Lining according to one of Claims 1 to 10, **characterised in that** decorative layer (6) is an air-permeable PE non-woven fabric layer.

12. Method for making a vehicle rooflining according to Claim 1, **characterised in that**
(a) An air-impermeable back layer (9) is covered with first reinforcement fibres (11), especially glass fibres, and a support layer (3), especially a PU foam layer, is applied to the reinforcement fibres (11)
(b) The back layer (9), reinforcement fibres (11) and support layer (3) are impregnated jointly with a pre-determined quantity of a first component (12) of an adhesive (7) and to do this, are transported together through a bath (13) filled with this first component (12) and first squeezing rollers (14) disposed downline, for example.
(c) The support layer (3) impregnated in this way is covered with second reinforcement fibres (15), especially glass fibres, and then wetted, especially sprayed, with a second component (16) of the adhesive (7).
(d) A semi-permeable and migration-resistant barrier layer (8) is applied to the second reinforcement fibres (15) and is then pressed with the other layers (9, 11, 3, 15) with the aid of second squeezing rollers (17), for example, in order to allow the two adhesive components (12, 16) to react with each other, before a self-adhesive decorative layer (6) is applied to this barrier layer (8).
(e) The layers applied to each other in this way are then cut to size as required and hot shaped.

## Revendications

1. Revêtement pour le toit d'un véhicule (2) comportant une couche de support perméable à l'air (3), cette couche de support (3) comportant du côté du toit du véhicule une première couche de renforcement perméable à l'air (4) et du côté de l'habitacle une deuxième couche de renforcement perméable à l'air (5), la première couche de renforcement du côté du toit du véhicule comportant une couche arrière imperméable à l'air (9), la deuxième couche de renforcement (5) du côté de l'habitacle comportant une couche décorative perméable à l'air (6), les différentes couches étant reliées par une colle perméable à l'air (7),
**caractérisé en ce qu'**en vue de la production d'un revêtement du toit d'un véhicule optimal du point de vue acoustique et d'un aspect esthétique stable, une couche de blocage semi-perméable et résistante à la migration (8) est agencée entre la deuxième couche de renforcement (5) et la couche décorative (6).

2. Revêtement selon la revendication 1, **caractérisé en ce que** les couches du côté de l'habitacle présentent une résistance à l'écoulement d'air de 500 Nsm⁻³ < R₁ < 2500 Nsm⁻³, en particulier de 900 Nsm⁻³ < R₁ < 1900 Nsm⁻³.

3. Revêtement selon l'une des revendications 1 ou 2, **caractérisé en ce que** la couche de support perméable à l'air (3) est composée d'une mousse de polyuréthane.

4. Revêtement selon l'une des revendications 1 à 3, **caractérisé en ce que** la couche de renforcement (4) englobe une couche de fibres de verre.

5. Revêtement selon l'une des revendications 1 à 4, **caractérisé en ce que** la couche de blocage (8) est composée d'un non-tissé de fibres mélangées d'un poids compris entre environ 20 et 60 g/m², en particulier d'un non-tissé de fibres mélangées d'un poids de l'ordre de 45 g/m².

6. Revêtement selon la revendication 5, caratérisé en ce que la couche de blocage (8) contient des fibres de cellulose et de polyester à liaison chimique.

7. Revêtement selon la revendication 6, **caractérisé en ce qu'**en vue d'établir les propriétés humectantes voulues, la surface de la couche de blocage est soumise à un traitement correspondant.

8. Revêtement selon l'une des revendications 1 à 7, **caractérisé en ce que** la couche de blocage (8) présente une résistance à la migration des émollients, des produits de décomposition dus au vieillissement et/ou des additifs de la couche de mousse de polyuréthane ou des couches de colle.

9. Revêtement selon l'une des revendications 1 à 8, **caractérisé en ce que** la couche de blocage (8) a une épaisseur comprise entre 0,2 et 1,0 mm, en particulier de 0,285 mm.

10. Revêtement selon l'une des revendications 1 à 9, **caractérisé en ce que** la colle (7) est une colle de polyuréthane à deux composants conventionnelle.

11. Revêtement selon l'une des revendications 1 à 10, **caractérisé en ce que** la couche décorative (6) est constituée par une couche de non-tissé de polyéthylène perméable à l'air.

12. Procédé de fabrication d'un revêtement de toit selon la revendication 1, **caractérisé en ce que**
a) une couche arrière imperméable à l'air (9) est revêtue de fibres de renforcement (11), en particulier de fibres de verre, une couche de support (3), en particulier une couche de mousse de polyuréthane étant appliquée sur les fibres de renforcement (11),
b) la couche arrière (9), les fibres de renforcement (11) et la couche de support (3) sont imprégnées en commun par une quantité prédéterminée d'un premier composant (12) d'une colle (7), et qu'elles sont à cet effet par exemple passées en commun à travers un bain (13) rempli de ce premier composant (12) et ensuite à travers des premiers rouleaux de compression (14),
c) la couche de support (3) ainsi imprégnée est revêtue de deuxièmes fibres de renforcement (15), en particulier de fibres de verre, avant d'être humectée d'un deuxième composant (16) de la colle (7), celui-ci étant en particulier appliqué par pulvérisation,
d) une couche de blocage semi-perméable et résistante à la migration (8) est appliquée sur les deuxièmes fibres de renforcement (15), celle-ci étant pressée contre les autres couches (9, 11, 3, 15) par exemple par l'intermédiaire de deuxièmes rouleaux de compression (17), pour entraîner une réaction entre les deux composants de la colle (12, 16), avant l'application d'une couche décorative autocollante (6) sur cette couche de blocage (8),
e) les couches ainsi réunies sont découpées aux dimensions voulues et moulées à chaud.
